# EUROPÄISCHE PATENTSCHRIFT

(11) **EP 1 185 352 B1**
(45) Veröffentlichungstag und Bekanntmachung des Hinweises auf die Patenterteilung: **21.05.2003**
(21) Anmeldenummer: 00925178.6
(22) Anmeldetag: 07.04.2000
(51) Int. Cl.: B01D 46/24

(54) **VERFAHREN ZUM ABREINIGEN VON ROHRFÖRMIGEN FILTERELEMENTEN**
METHOD FOR CLEANING PIPE-SHAPED FILTER ELEMENTS
PROCEDE DE NETTOYAGE D'ELEMENTS FILTRANTS TUBULAIRES

(30) Priorität: 16.04.1999 DE 19917165
(43) Veröffentlichungstag der Anmeldung: 13.03.2002
(73) Patentinhaber: Forschungszentrum Karlsruhe GmbH, 76133 Karlsruhe (DE); Schumacher Umwelt- und Trenntechnik GmbH, D-74564 Crailsheim (DE)
(72) Erfinder: LEIBOLD, Hans, D-76316 Malsch-Waldprechtsweier (DE); MAI, Robert, D-76185 Karlsruhe (DE); ZIMMERLIN, Bernd, D-76287 Rheinstetten (DE); SCHULZ, Karsten, D-92260 Ammerthal (DE)
(86) Internationale Anmeldenummer: EP0003123
(87) Internationale Veröffentlichungsnummer: WO00062902

(56) Entgegenhaltungen:
- EP-A- 0 551 951
- US-A- 5 328 492

## Beschreibung

Die vorliegende Erfindung betrifft ein Verfahren zum Abreinigen von durch Rohgas angeströmten, rohrförmigen Filterelementen mit einem den Filterelementen in Strömungsrichtung nachgeschalteten, im Reingasraum angeordneten Sicherheitsfilter, durch Rückspülen des Filterelementes von der Reingasseite her, sowie eine Vorrichtung zur Ausübung des Verfahrens. Als Filterelemente sollen dabei vor allem sogenannte Filterkerzen, die bei der Heißgasfiltration verwendet werden, beispielsweise betrachtet werden. Es versteht sich jedoch, daß das erfindungsgemäße Verfahren auf alle rohrförmigen oder hohlzylindrischen Filterelemente anwendbar ist.

Bei konventionellen Systemen wird die Abreinigungsintensität durch die Schallgeschwindigkeit als Obergrenze für die Durchströmung der Filterkanäle begrenzt. Da der Überdruck in Filterkerzen, der für die Abreinigung notwendig ist, aus der Bewegungsenergie des Gases gewonnen wird, bleibt er deswegen begrenzt. Das Betriebsverhalten verschlechtert sich zusätzlich, wenn die Filter einen hohen Widerstand z. B. durch eingedrungenen Feinstaub, hohe Staubgehalte oder hohe Filtrationsgeschwindigkeiten aufweisen. Verstopfte Filter können daher kaum wieder freigeblasen werden.

Das neue Verfahren befaßt sich speziell mit der Hochtemperatur-Partikelfiltration vor allem keramischer Filterkerzen. Speziell ist die Problematik der Abreinigung und des gleichzeitigen Anlagenschutzes beim Bruch einer Filterkerze angesprochen. Zur Abreinigung der Filterkerzen wird derzeit reingasseitig ein Druckimpuls eingeleitet. Bei langen Kerzen mit geringem Innendurchmesser ergeben sich hieraus im Bereich des Kerzenkopfes nur vergleichsweise geringe erzielbare Abreinigungsintensitäten. Systembedingt muß das Spülmedium beim 2-fachen des Systemdruckes liegen, um eine optimale Abreinigungsintensität zu erzielen. Der Druck beträgt dabei üblicherweise mindestens 6 bar. Bei der druckbetriebenen Kohlekonversion bedeuted dies Abreinigungsdrükke zwischen 15 und 60 bar, auf die gereinigtes Produktgas oder N₂ als Abreinigungsgas komprimiert werden muß. Dazu führt der Bruch einer Filterkerze während des Betriebes zu unzulässig hohen Staubemissionen mit einer Staubverschleppung, durch die bei kombinierten Gas-/Dampfturbinenprozessen die hinter dem Heißgasfilter angeordnete Gasturbine beschädigt werden kann. Deshalb werden Maßnahmen angestrebt, die auch beim Bruch einer Filterkerze die Aufrechterhaltung des Kraftwerksbetriebes erlauben. Die klassische Maßnahme dafür ist das Vorsehen einer zweiten Filterstufe in Form eines der Filterkerze nachgeschalteten Sicherheitsfilters.

Aus der EP 0 551951 A1 ist eine solche Methode für durch Rohgas von außen angeströmte Filterkerzen mit jeweils einem der einzelnen Filterkerze in Strömungsrichtung nachgeschalteten, im Reingasraum angeordneten Sicherheitsfilter bekannt, bei welchem die Abreinigung durch Rückspülen der Filterkerze von der Reingasseite her durch einen, in die Filterkerze eindringenden Freistrahl erfolgt. Dies bedingt eine relativ schlechte Abreinigung, wobei zusätzlich ein Verlust an Spülgas durch den Sicherheitsfilter stattfindet.

Die vorliegende Erfindung hat daher zur Aufgabe, ein Verfahren zum Abreinigen von Filterkerzen anzugeben, das einerseits eine verbesserte Abreinigungsfunktion für die jeweilige Filterkerze aufweist und das andererseits auch noch nach dem Bruch einer einzelnen Filterkerze einer Filterkerzenbatterie oder -reihe für die Abreinigung der übrigen Filterkerzen ohne Kontaminationsverschleppung auf die Reingasseite geeignet ist.

Zur Lösung der Aufgabe schlägt die vorliegende Erfindung die Merkmale vor, die im kennzeichnenden Teil des Patentanspruches 1 angeführt sind. Weitere, vorteilhafte Ausgestaltungen der Erfindung sind in den kennzeichnenden Merkmalen der Unteransprüche zu sehen.

Weitere Einzelheiten der Erfindung sind im folgenden und anhand der Figuren 1 bis 4 näher erläutert. Es zeigen:
die Figur 1 ein Anlagenschema zur Durchführung des Verfahrens mit Gasführung beim normalen Filtrationsbetrieb,
die Figur 2 dasselbe jedoch mit Gasführung bei der Abreinigung,
die Figur 3 der Übergang laminar/turbulent (auf/zu) am Schaltelement,
die Figur 4 die Abreinigungsintensität des neuen Verfahrens im Vergleich zu einem konventionellen.

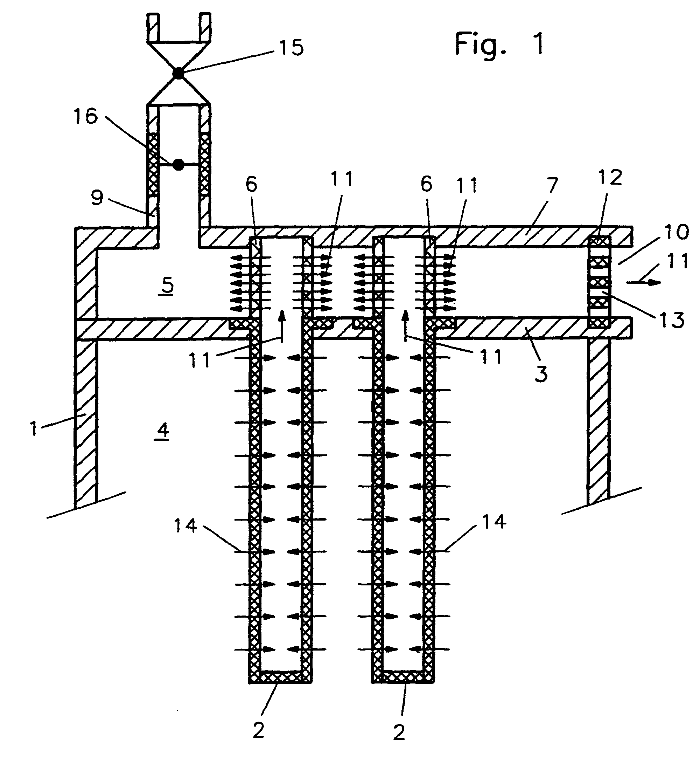

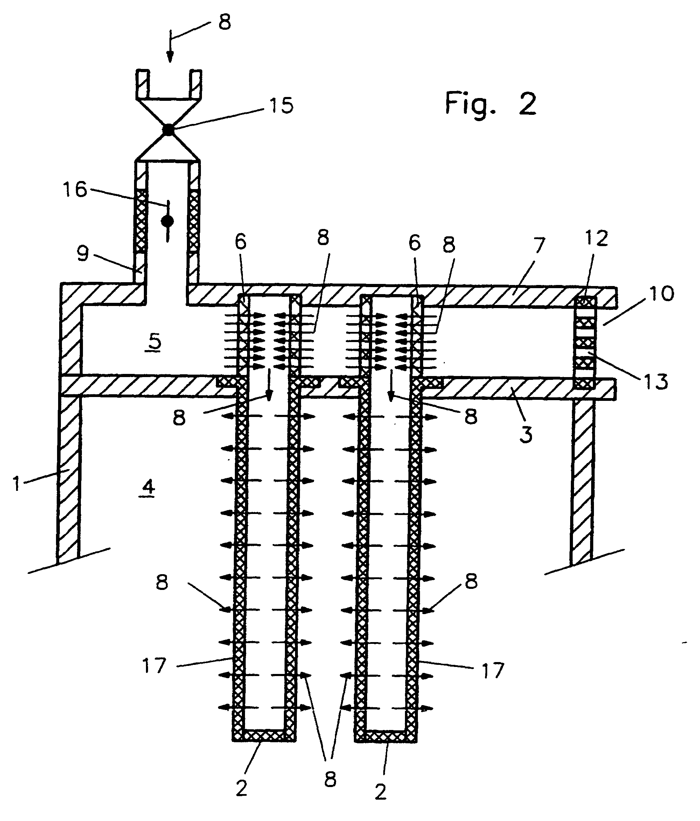

In den Figuren 1 und 2 ist schematisch ein Filtergehäuse 1 dargestellt, welches durch eine Trennwand 3 in einen Rohgasraum 4 und einen Reingasraum 5 aufgeteilt ist. In die Trennwand 3 ist bei der in der Figur 1 vereinfacht dargestellten Ausführung von oben her eine vorzugweise keramische Filterkerze 2 als rohrförmiges Filterelement eingesetzt, die von unten her von dem zu reinigenden Gasstrom durchströmt wird. Gebräuchliche Filteranlagen besitzen davon mehrere in Reihen oder Clustern angeordnete Filterkerzen in Form von Filterbatterien, die nicht näher dargestellt sind, für die das neue Verfahren jedoch ebenfalls vorgesehen ist und für die die in den Figuren 1 und 2 dargestellte Filterkerze 2 stellvertretend betrachtet wird. Im Reingasraum 5 hinter der Filterkerze 2 -in Strömungsrichtung des zu reinigenden Gasstromes gesehen- sitzt ein Sicherheitsfilter 6 direkt auf der Filterkerze 2 über der Trennwand 3, der eine größere Porenweite und damit eine höhere Durchlässigkeit als die der Filterkerze 2 aufweist.

Der Sicherheitsfilter 6, bei der dargestellten Ausführungsform ein ringförmiges, keramisches Element, ist nach unten zum Innenraum der Filterkerze 2 hin geöffnet, nach oben hin durch den Deckel 7 des Gehäuses 1 verschlossen, so daß er auch vom Reingasraum 5 her und zu diesem hin durchströmbar ist. Durch den Deckel 7 führen ein oder mehrere Anschlußleitungen 9 für die Spülluft 8, mittels welcher die Filterkerze 2 zur Abreinigung der auf ihrer Rohgasseite im Rohgasraum 4 abgeschiedenen Partikel rückgespült werden soll. Zum Aufbringen der Spülluft 8 ist in der Anschlußleitung 9 ein schnell öffnendes Abreinigungsventil 15 vorgesehen, wobei zwischen diesem und dem heißen Reingasraum 5 eine zusätzliche, hochtemperaturbeständige Klappe 16 zwischengeschaltet ist. Mit dieser Klappe 16 wird das eventuell temperaturempfindliche Abreinigungsventil 15 bei Hochtemperaturanwendungen gegen Temperaturbelastung durch Hitzeeinwirkung des heissen Reingases geschützt.

Der Reingasraum 5 ist an seiner, dem Abluftkanal 10 zugeordneten Seite diesem gegenüber durch ein besonderes "Schaltelement" abgeschlossen, welches einerseits den ungestörten Durchtritt der gereinigten Abluft ermöglicht, andererseits aber den Durchtritt der Spülluft 8 in den Abluftkanal 10 verhindert. Dieses "Schaltelement" besteht aus einem strömungsdynamischen, pneumatischen Schalter 12 ohne bewegliche Teile, dessen Durchlaß wechselweise durch den an ihm vom Reingasraum 5 her anliegenden niedrigeren Prozessdruck freigegeben und durch den höheren Rückspüldruck gesperrt wird. Der Schalter 12 besteht dabei in einer besonders vorteilhaften Ausführung aus einem porösen keramischen Element, das,-in den Figuren 1 und 2 zur Prinzipdarstellung vergrößert abgebildete-, innere Durchgangskanäle 13 vom Reingasraum 5 zum Abluftkanal 10 aufweist. Das Verhältnis von freier Kanalfläche zum Restmaterial des Schalters 12 ist dabei so gewählt, daß beim Prozeßdruck eine widerstandsarme Durchströmung erfolgen kann, bei dem pulsweise aufgebrachten höheren Rückspül- bzw. Abreinigungsdruck der Strömungswiderstand so groß ist, daß der Durchgang durch das poröse Element 12 praktisch gesperrt ist. Dadurch wird es nun möglich, daß der zum Rückspülen erforderliche Spülgasstrom vom Reingasraum hinter der Filterkerze 2 unter Absperren desselben gegen die Abluftseite durch den Sicherheitsfilter 6 in bzw. durch die Filterkerze 2 geführt werden kann. Als "Schaltelement" zum Absperren sind natürlich auch andere Schalter als das poröse keramische Element 12 denkbar, wichtig für den Hochtemperaturbetrieb ist dabei, daß für den Schaltvorgang ohne bewegliche Teile ausgekommen werden sollte. Wesentlich ist dabei, daß der Sicherheitsfilter 6 eine höhere Durchlässigkeit als die Filterkerze 2 und der strömungsdynamische Schalter 12 eine höhere als der Sicherheitsfilter 6 aufweist.

Die Funktion des Abreinigungsventiles 15 und der Klappe 16 ist nun wie folgt:

Im normalen Filtrationsbetrieb gemäß der Figur 1 bleibt die Klappe 16 geschlossen und schirmt dadurch das ebenfalls geschlossene Abreinigungsventil 15 gegen direkte Hitzebelastung ab. Bei Einleitung eines Abreinigungsvorganges wird zunächst die Klappe 16 geöffnet, ihre Schaltzeit liegt etwa im Sekundenbereich. Danach wird das schnellöffnende Abreinigungsventil 15 mit einer Schaltzeit im Bereich von einigen 10 msec geöffnet und die Spülluft 8 strömt nacheinander durch das Abreinigungsventil 15 und die Klappe 16 in den Reingasraum 5 und gelangt über den Sicherheitsfilter 6 und die Filterkerze 2 an die abzureinigende Staubschicht 17 auf der Außenseite der Filterkerze 2. Zur Beendigung des Abreinigungsvorganges schließt zunächst das Abreinigungsventil 15 und danach die temperaturbeständige Klappe 16. Da der Abreinigungsvorgang selbst nach einer Zeit von weit unter lsec abgeschlossen ist, ergibt sich entsprechend für die Klappe eine Gesamtöffnungszeit von lediglich wenigen Sekunden, in welcher das Abreinigungsventil 15 hohen Temperaturen ausgesetzt ist.

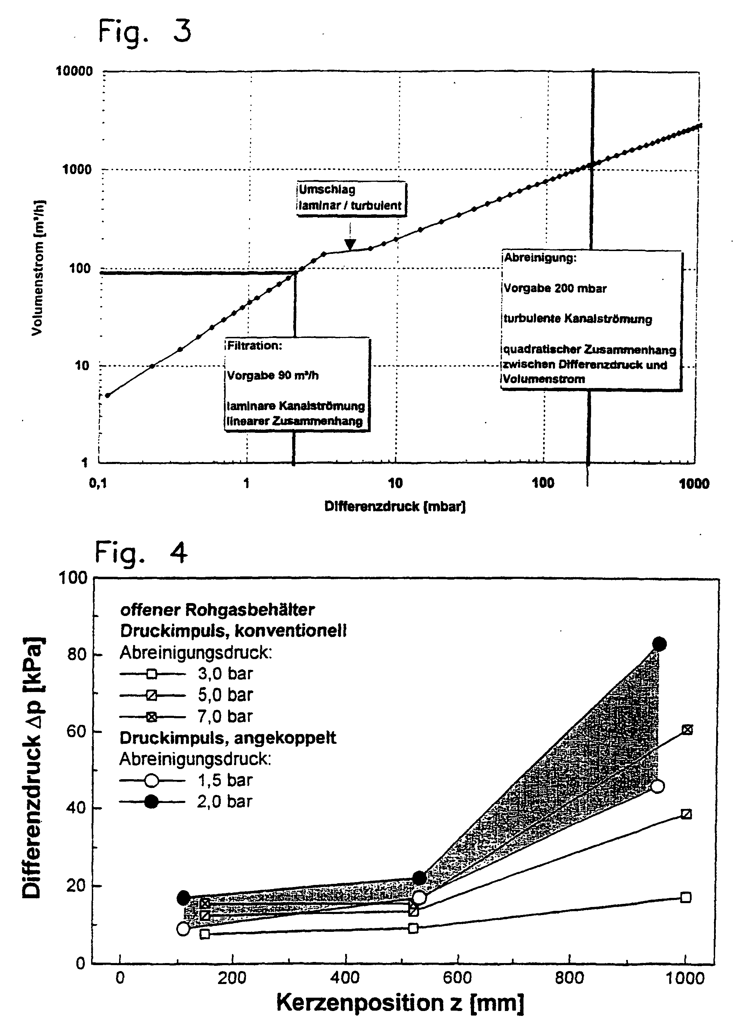

Durch die direkte Koppelung der Abreinigungseinheit für eine oder mehrere Filterkerzen 2 über den porösen Sicherheitsfilter 6 kann nun einerseits die Abreinigungsintensität beliebig eingestellt werden, andererseits fungiert dieses Sicherheitsfilter 6 als integriertes Sicherheitselement. Die Freischaltung der Spülluft 8 im Abreinigungsfall bzw. der gereinigten Abluft 11 ermöglicht dabei der im Vorstehenden erwähnte Schalter 12. Die erzielbare Abreinigungsintensität wird dabei allein durch den statischen Druck im Abreinigungssystem vorgegeben. Sie ist daher nicht mehr hydraulisch begrenzt und kann entsprechend dem erforderlichen Überdruck in der Filterkerze 2 eingestellt werden. Insbesondere im kritischen Einlaufbereich der Kerzen lässt sich dadurch die Abreinigungsintensität anheben, bei gleichzeitig signifikant verringertem Abreinigungsvordruck (siehe die Figur 4). Auch verstopfte Filterkerzen lassen sich mit dem erfindungsgemäßen Verfahren wieder freiblasen, da die Abreinigungsintensität nahezu unabhängig vom Beladungszustand der Filterkerze ist.

Der Schalter 12 besteht vorteilhafterweise aus einem Wabenkörper mit durchgehenden Längskanälen mit Querschnitten im Bereich von wenigen mm², wobei als Material für den Wabenkörper Keramik wie z.B. SiC, Al₂O₃, Cordierit oder Spinell verwendet werden kann. Er kann aber auch aus porösen Materialien wie Schäumen, Metallfasern, -geweben oder anderen Fasermaterialien, Kornkeramik oder Sintermetallen mit einem durchgehenden Porensystem mit wenigen 100 µm Querschnitten bestehen. Die porösen Materialien können dabei Si₃N₄, ZrO₂, SiC, Al₂O₃ oder Spinell sein.

Charakteristische Betriebswerte des Verfahrens sind wie folgt:
Spüldruck der Spülluft 8: 0,5 bis 1 bar über dem Systemdruck,
Druckverlust der Filterkerze 2 und des Sicherheitsfilters 6: 500 bis 1000 Pa bei 5 cm/sec Durchströmungsgeschwindigkeit
Druckverlust des Schalters 12: 30 bis 250Pa bei 2,5 cm/sec

Dabei handelt es sich jeweils um den die Durchlässigkeit bestimmenden Druckverlust.

Die Figur 3 zeigt anhand des Volumenstromes über dem Differenzdruck den Übergang laminar/turbulent (auf/zu) am Schaltelement einer Anordnung von drei Filterkerzen. Die Filtration erfolgt etwa bis zu einem Differenzdruck von 2 mbar bei einem Volumenstrom von 90 m³/h. Dabei liegt in den Kanälen 13 des Schalters 12 eine laminare Strömung vor. Der Zusammenhang zwischen Volumenstrom und Differenzdruck ist noch linear. Bei Erhöhung der Werte, hier durch Aufbringen des Druckes der Spülluft 8, schlägt die Strömung in den Kanälen 13 von laminar zu turbulent um. Die Abreinigung erfolgt bei einem Druck von etwa 200 mbar, die Strömung in den Kanälen ist turbulent, der Druckverlust darin ist stark erhöht, der Schalter 12 ist damit für eine Durchströmung praktisch geschlossen.

In der Figur 4 ist die Abreinigungsintensität des neuen Verfahrens (Kreise) an der jeweiligen Kerzenposition, das heisst über die Länge einer Kerze hinweg, im Vergleich zu einem konventionellen Verfahren (Quadrate) dargestellt. Es werdenwesentlich niederere, erforderliche Abreinigungsdrücke an den jeweiligen Positionen benötigt, um die für eine wirkungsvolle Abreinigung erforderlichen Differenzdrücke zu erhalten.

Das neue Verfahren bringt damit eine erhöhte Sicherheit gegen Staubdurchbruch. Die Verfahrensführung durch das aufgesetzte Sicherheitsfilter garantiert zu jedem Zeitpunkt und damit auch bei Kerzenbruch die Einhaltung der geforderten Reingasstaubgehalte. Weiter wird ein sicherer Weiterbetrieb der unbeschädigten Filterelemente ermöglicht. Filterkerzen 2, die in Reihe oder im selben Cluster angeordnet sind wie ein beschädigtes Element, können sicher weiterbetrieben werden ohne Gefahr des Staubeintrages von des Reingasseite her, bei unverändert hoher Abreinigungsintensität. Als weiterer Vorteil sind keine speziellen Rohrleitungen im Hochtemperaturteil des Filters mehr erforderlich. Die erforderlichen Sicherheitsfilter 6 werden auf die vorhandene Filterkerze 2 einfach aufgesetzt oder sind Bestandteil derselben. Das Schaltelement 12 kann als starres Teil in die Reingasleitung eingebaut werden. Die gesamte Filteranlage kann dadurch kompakter gehalten werden. Für die Abreinigung ist jeweils nur ein konstanter Überdruck zwischen 0,5 und 1 bar erforderlich, unabhängig vom Systemdruck. Der Vorteil bei einem hohen Systemdruck ist dabei offensichtlich. Während der überwiegenden Dauer des Abreinigungsvorganges gelangt nur heißes Gas aus dem Reingasraum der Filterenheit in die Filterkerzen 2. Ein erhöhte Thermowechsel- oder Thermoschockbeanspruchung der Filterkeramik tritt dadurch nicht mehr auf. Auch können letzlich die Absperrorgane 15 und 16 für die Spülluft 8 in größerem Abstand von dem Dekkel 7 angeordnet werden, was unter Hochtemperaturbedingungen von erheblichem Vorteil ist.

### Bezugszeichenliste:

- 1: Filtergehäuse
- 2: Filterelement
- 3: Trennwand
- 4: Rohgasraum
- 5: Reingasraum
- 6: Sicherheitsfilter
- 7: Deckel
- 8: Spülluft
- 9: Anschluß
- 10: Abluftkanal
- 11: Abluft
- 12: poröses Element, strömungsdynamischer Schalter
- 13: Kanäle
- 14: Rohgas
- 15: Abreinigungsventil
- 16: Klappe
- 17: Staubschicht

## Patentansprüche

1. Verfahren zum Abreinigen von durch Rohgas angeströmten rohrförmigen Filterelementen (2) mit einem den Filterelementen (2) in Strömungsrichtung nachgeschalteten, im Reingasraum (5) angeordneten Sicherheitsfilter (6), durch Rückspülen des Filterelementes (2) von der Reingasseite her, **dadurch gekennzeichnet,**
**daß** der zum Rückspülen erforderliche Spülgasstrom vom Reingasraum (5) hinter dem Filterelement (2) unter Absperren desselben gegen die Abluftseite (10) durch den Sicherheitsfilter (6) in bzw. durch die Filterkerze (2) geführt wird.

2. Verfahren nach Anspruch 1, **dadurch gekennzeichnet, daß** bei Einleitung eines Abreinigungsvorganges unmittelbar vor dem Öffnen des schnellöffnenden Abreinigungsventiles (15) für den Spülgasstrom zunächst eine zwischen dem Ventil und dem Reingasraum (5) angeordnete Klappe (16) geöffnet und nach oder gleichzeitig mit den Schließen des Ventiles wieder geschlossen wird.

3. Verfahren nach Anspruch 1 oder 2, **dadurch gekennzeichnet,**
**daß** die Abreinigung unter Prozeßdruck mit einem Rückspüldruck durchgeführt wird, der höher ist als der Prozeßdruck.

4. Verfahren nach Anspruch 1, 2 oder 3, **dadurch gekennzeichnet,**
**daß** das Rückspülmedium impulsweise eingeleitet wird.

5. Verfahren nach einem der Ansprüch 1 bis 4 **dadurch gekennzeichnet,**
**daß** die Abreinigung mit heißem Gas durchgeführt wird.

6. Vorrichtung zur Ausübung des Verfahrens nach einem der Ansprüche 1 bis 5 mit mindestens einem rohrförmigen Filterelement (2), dem in Strömungsrichtung im Reingasraum (5) ein Sicherheitsfilter (6) nachgeschaltet ist, wobei der Reingasraum (5) mindestens eine Abluftöffnung (10) aufweist, **dadurch gekennzeichnet,**
**daß** der Reingasraum (5) mindestens eine Anschlußleitung (9) für die Spülluft (8) aufweist und daß in oder an der Abluftöffnung (10) ein strömungsdynamischer Schalter (12) ohne bewegliche Teile angeordnet ist, dessen Durchlaß wechselweise durch den an ihm vom Reingasraum (5) her anliegenden niedrigeren Prozessdruck freigegeben und durch den höheren Rückspüldruck gesperrt wird.

7. Vorrichtung nach Anspruch 6, **dadurch gekennzeichnet, daß** in der Anschlußleitung (9) ein schnellöffnendes Abreinigungsventil (15) angeordnet und zwischen diesem und dem heißen Reingasraum (5) eine zusätzliche Klappe (16) zwischengeschaltet ist.

8. Vorrichtung nach Anspruch 6 oder 7, **dadurch gekennzeichnet,**
**daß** der Schalter (12) aus einem Wabenkörper mit durchgehenden Längskanälen (13) mit Querschnitten im Bereich von wenigen mm² besteht.

9. Vorrichtung nach einem der Anspruch 8, **dadurch gekennzeichnet,**
**daß** der Wabenkörper aus Keramik wie z.B. SiC, Al₂O₃, Cordierit oder Spinell besteht.

10. Vorrichtung nach Anspruch 6 oder 7, **dadurch gekennzeichnet,**
**daß** der Schalter (12) aus porösen Materialien wie Schäumen, Metallfasern,-geweben oder anderen Fasermaterialien, Kornkeramik oder Sintermetallen mit einem durchgehenden Porensystem mit wenigen 100µm Querschnitten besteht.

11. Vorrichtung nach Anspruch 10, **dadurch gekennzeichnet, daß** die porösen Materialien aus Si₃N₄, ZrO₂, SiC, Al₂O₃, Spinell oder Sintermetallen bestehen.

12. Vorrichtung nach einem der Ansprüche 6 bis 11, **dadurch gekennzeichnet,**
**daß** der Sicherheitsfilter (6) eine höhere Durchlässigkeit als die Filterkerze (2) und der strömungsdynamische Schalter (12) eine höhere als der Sicherheitsfilter (6) aufweist.

13. Vorrichtung nach Anspruch 12, **dadurch gekennzeichnet, daß** der die Durchlässigkeit des Schalters (12) bestimmende Druckverlust im Bereich von 30 bis 250 Pa bei 2,5 cm/sec Strömungsgeschwindigkeit liegt.

## Claims

1. Method of cleaning tubular filter elements (2), which are traversed by crude gas and have a safety filter (6) which is connected downstream of the filter elements (2), when viewed with respect to the direction of flow, and is disposed in the filtered gas chamber (5), by back-flushing the filter element (2) from the filtered gas side, **characterised in that** the flow of scavenging gas, required for the back-flushing process, is guided into or respectively through the filter cartridge (2) from the filtered gas chamber (5) behind the filter element (2) by closing-off said chamber from the air outlet side (10) through the safety filter (6).

2. Method according to claim 1, **characterised in that**, when a cleaning operation is introduced immediately prior to the quick-opening cleaning valve (15) being opened for the flow of scavenging gas, a flap (16), disposed between the valve and the filtered gas chamber (5), is initially opened and closed again after or simultaneously with the closing of the valve.

3. Method according to claim 1 or 2, **characterised in that** the cleaning is effected under operational pressure with a back-flushing pressure which is higher than the operational pressure.

4. Method according to claim 1, 2 or 3, **characterised in that** the back-flushing medium is introduced in a pulse-like manner.

5. Method according to one of claims 1 to 4, **characterised in that** the cleaning is effected with hot gas.

6. Apparatus for accomplishing the method according to one of claims 1 to 5, having at least one tubular filter element (2), downstream of which, when viewed with respect to the direction of flow, is connected a safety filter (6) in the filtered gas chamber (5), the filtered gas chamber (5) having at least one air outlet aperture (10), **characterised in that** the filtered gas chamber (5) has at least one connection pipe (9) for the scavenging air (8), and **in that** a flow-dynamic switch (12) is disposed in or on the air outlet aperture (10) without displaceable parts, the throughflow of said switch being alternately released by the lower operational pressure, which is applied thereto from the filtered gas chamber (5), and blocked by the higher back-flushing pressure.

7. Apparatus according to claim 6, **characterised in that** a quick-opening cleaning valve (15) is disposed in the connection pipe (9), and an additional flap (16) is interposed between said valve and the hot filtered gas chamber (5).

8. Apparatus according to claim 6 or 7, **characterised in that** the switch (12) comprises a lattice-like body with continuous longitudinal ducts (13) having cross-sections in the range of a few mm.

9. Apparatus according to claim 8, **characterised in that** the lattice-like body is formed from ceramic material, such as, for example, SiC, Al₂O₃, cordierite or spinel.

10. Apparatus according to claim 6 or 7, **characterised in that** the switch (12) is formed from porous materials such as foams, metallic fibres, metallic fabrics or other fibrous materials, granular ceramic material or sintered metals with a continuous pore system having cross-sections of a few 100 µm.

11. Apparatus according to claim 10, **characterised in that** the porous materials comprise Si₃N₄, ZrO₂, SiC, Al₂O₃, spinel or sintered metals.

12. Apparatus according to one of claims 6 to 11, **characterised in that** the safety filter (6) has a higher permeability than the filter cartridge (2), and the flow-dynamic switch (12) has a higher permeability than the safety filter (6).

13. Apparatus according to claim 12, **characterised in that** the loss of pressure, determining the permeability of the switch (12), lies in the range of 30 to 250 Pa at a flow speed of 2.5 cm/sec.

## Revendications

1. Procédé pour nettoyer des éléments filtrants (2), tubulaires, traversés par un gaz non nettoyé, comportant en aval des éléments filtrants (2), un filtre de sécurité (6) installé dans la chambre de gaz filtré (5), par rinçage inverse de l'élément filtrant (2) à partir du côté du gaz filtré,
**caractérisé en ce que**
la veine de gaz de rinçage nécessaire pour le rinçage inverse est conduite de la chambre de gaz filtré (5) en aval de l'élément filtrant (2), par fermeture de cette chambre vis-à-vis du côté de sortie (10), par le filtre de sécurité (6) dans ou à travers la bougie filtrante (2).

2. Procédé selon la revendication 1,
**caractérisé en ce que**
lorsqu'on lance l'opération de nettoyage, immédiatement après l'ouverture de la vanne de nettoyage (15) à ouverture rapide pour le gaz de rinçage, on ouvre tout d'abord un volet (16) installé entre la vanne et la chambre de gaz filtré (5), et ensuite ou simultanément avec la fermeture de la vanne, on ferme de nouveau ce volet.

3. Procédé selon la revendication 1 ou 2,
**caractérisé en ce que**
le nettoyage se fait à la pression du procédé correspondant à la pression de rinçage inverse, cette pression étant supérieure à la pression du procédé.

4. Procédé selon les revendications 1, 2 ou 3
**caractérisé en ce que**
le fluide de rinçage inverse est introduit de manière impulsionnelle.

5. Procédé selon l'une des revendications 1 à 4,
**caractérisé en ce que**
le nettoyage se fait avec du gaz chaud.

6. Dispositif pour la mise en oeuvre du procédé selon l'une des revendications 1 à 5, comportant au moins un élément filtrant (2), tubulaire, avec en aval de celui-ci un filtre de sécurité (6) installé dans la chambre de gaz filtré (5), cette chambre de gaz filtré (5) comportant au moins un orifice d'évacuation (10),
**caractérisé en ce que**
la chambre de gaz filtré (5) comporte au moins une conduite de branchement (9) pour l'air de rinçage (8), et
dans ou au niveau de l'orifice de ventilation (10), il est prévu un commutateur (12) dynamique d'écoulement, ne comportant pas de pièce mobile et dont le débit peut être alternativement libéré par la pression de procédé, faible, appliquée par la chambre de gaz filtré (5) ou être fermé par la pression de rinçage inverse, élevée.

7. Dispositif selon la revendication 6,
**caractérisé en ce que**
la conduite de branchement (9) comporte une vanne de nettoyage (15) à ouverture rapide, et entre cette vanne et la chambre de gaz filtré (5), chaud, il est prévu un volet supplémentaire (16).

8. Dispositif selon les revendications 6 ou 7,
**caractérisé en ce que**
le commutateur (12) est formé d'un corps en nid d'abeille avec des canaux longitudinaux (13), traversants, ayant une section de quelques millimètres.

9. Dispositif selon la revendication 8,
**caractérisé en ce que**
le corps en nid d'abeille est en matière céramique, par exemple SiC, Al₂O₃, cordiérite ou spinelle.

10. Dispositif selon les revendications 6 ou 7,
**caractérisé en ce que**
le commutateur (12) est en une matière poreuse telle qu'une mousse, des fibres métalliques, des tissus métalliques ou autres matières fibreuses, de la céramique à l'état de grains ou des métaux frittés ayant un système de pores, passants, d'une section de quelques 100 µm.

11. Dispositif selon la revendication 10,
**caractérisé en ce que**
les matières poreuses sont en Si₃N₄, ZrO₂, SiC, Al₂O₃, spinelle ou des métaux frittés.

12. Dispositif selon l'une des revendications 6 à 11,
**caractérisé en ce que**
le filtre de sécurité (6) a une perméabilité supérieure à la bougie filtrante (2) et le commutateur dynamique d'écoulement (12) a une perméabilité supérieure à celle du filtre de sécurité (6).

13. Dispositif selon la revendication 12,
**caractérisé en ce que**
la perte de pression déterminant la perméabilité du commutateur (12) se situe dans une plage de 30 à 250 Pa pour une vitesse d'écoulement de 2,5 cm/sec.
